# EUROPEAN PATENT APPLICATION

(11) **EP 2 445 088 A2**
(43) Date of publication of application: **25.04.2012**
(21) Application number: 11185871.8
(22) Date of filing: 20.10.2011
(51) Int. Cl.: H02K 3/52

(54) **Brushless motor and electric power steering system**

(30) Priority: 22.10.2010 JP 2010237425
(71) Applicant: JTEKT Corporation, Osaka-shi, Osaka 542-8502 (JP)
(72) Inventor: Yamaguchi, Shigetoshi, Osaka-shi,, Osaka 542-8502 (JP)
(74) Representative: Winter, Brandl, Fürniss, Hübner, Röss, Kaiser, Polte - Partnerschaft

(57) **Abstract**

A motor formed as a 10-pole 12-slot brushless motor includes: six delta-connected coils (32) that are among twelve motor coils (17), and arranged in a circular pattern such that any two of the delta-connected coils (32), which are next to each other in the circumferential direction, are different in winding direction; and six star-connected coils (35) that the remaining six motor coils (17), and arranged between the delta-connected coils (32) by connecting one ends (connection ends (35a)) of the star-connected coils (35) to respective six connection lines (31) providing connection between the delta-connected coils (32) such that any two of the star-connected coils (35), which are next to each other in the circumferential direction, are different in winding direction. Terminals of the star-connected coils (35) are grouped into sets each including three terminals that are next to each other in the circumferential direction, and three-phase driving voltages are applied to the other ends (free ends (35b)) of the star-connected coils (35) in each set.

## Description

### BACKGROUND OF THE INVENTION

### 1. Field of the Invention

The invention relates to a brushless motor and an electric power steering system.

### 2. Description of Related Art

It is a conventionally known fact that, in a 10-pole 12-slot brushless motor, a 14-pole 12-slot brushless motor, and a brushless motor having magnetic poles and slots the number of which are the integral multiples of the above-mentioned numbers, a torque ripple is reduced by employing a motor coil connection structure in which a delta connection (Δ connection) and a star connection (Y connection) are used in combination.

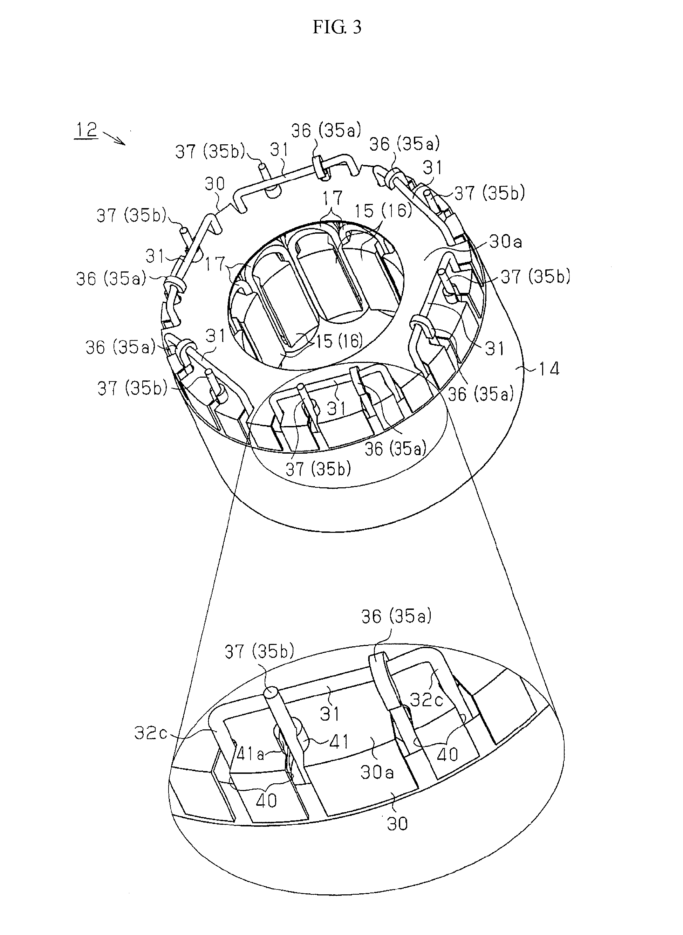

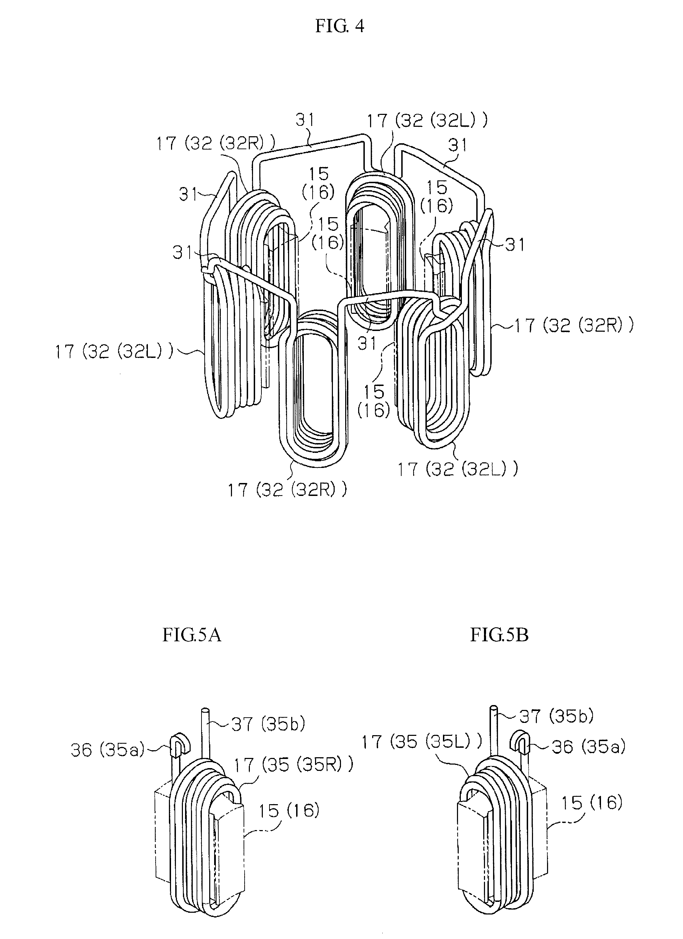

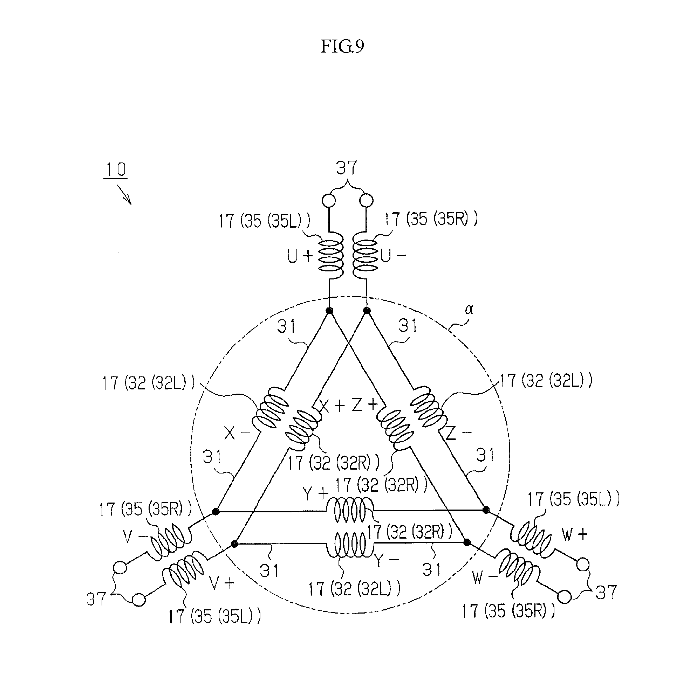

For example, the specification of Japanese Patent No. 3399330 describes a structure in which a delta connection and a three-phase star connection are formed. According to this specification, six motor coils are connected in delta. The remaining six motor coils connected in star are grouped into three pairs. The motor coils in each pair are connected in series. A pair of motor coils connected in star is connected to each of the positions that divide the motor coils connected in delta into three pairs, that is, three phases (see FIG. 3 and FIG. 4). The specification of Japanese Patent No. 3399330 describes another structure as well. In this structure, six motor coils are connected in delta, and the remaining six motor coils are grouped into three pairs and connected in star. The motor coils in each pair are connected in series. Then, the motor coils connected in delta and the motor coils connected in star are connected in parallel with each other (see FIG. 9). According to Japanese Patent Application Publication 2010-104112 (JP-A-2010-104112), six motor coils are grouped into three pairs, and connected in delta. The motor coils in each pair are connected in parallel. The remaining six motor coils are grouped into three pairs, and connected in star. The motor coils in each pair are connected in parallel. Then, the group of coils connected in delta and the group of coils connected in star are connected in parallel with each other (see FIG. 3).

That is, among 12n (n is an integer) motor coils arranged in a circular pattern, half of the motor coils are connected in delta to form three phases and the remaining half of the motor coils are connected in star to form three phases. Then, the phase of current supplied to each of the coils connected in delta and the phase of current supplied to each of the coils connected in star are shifted from each other by π/6 (electric angle) to cancel sextic-component torque ripples that occur in the coils connected in delta and the coils connected in star each other.

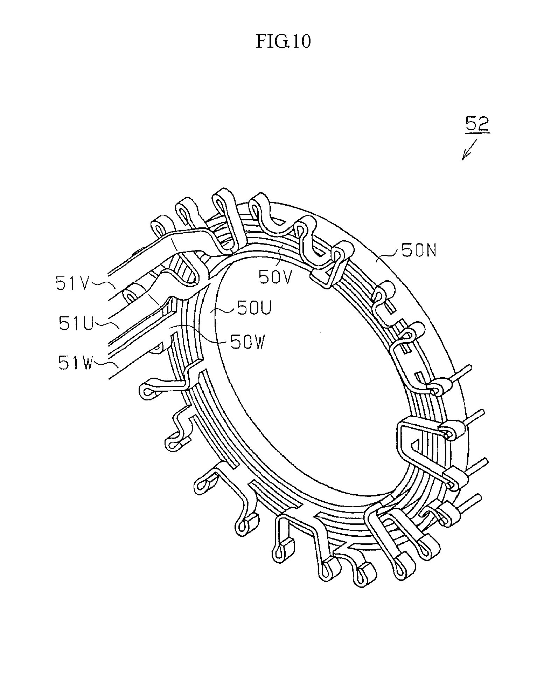

If any one of the connection structures described in the specification of Japanese Patent No. 3399330 and JP-A-2010-104112 is employed, it is necessary to connect the motor coils that are apart from each other in the circumferential direction. Therefore, a structure as shown in FIG. 10 is commonly employed to improve the assembly efficiency and reliability. In the structure, a bus bar 52 and an insulating resin holder (not shown) are used to connect motor coils to each other. The bus bar 52 has annular conductive plates 50U, 50V, 50W and 50N corresponding to the respective phases (U, V, W and neutral point) and power feed terminals 51U, 51 V and 51W. The insulating resin holder retains the bus bar 52.

However, there are always demands for a more compact and lower-cost motor that is used as a driving source of an electric actuator, for example, an electric power steering system. Therefore, provision of the above-described bus bar 52 (and insulating resin holder) is one of the impediments to provision of a more compact and lower-cost motor. For this reason, there have been demands for a novel technique for providing a more compact and lower-cost motor by omitting the bus bar while suppressing generation of a torque ripple.

### SUMMARY OF THE INVENTION

It is an object of the invention to provide more compact and lower-cost brushless motor and electric power steering system by omitting a bus bar, while suppressing occurrence of a torque ripple.

An aspect of the invention relates to a brushless motor that includes a rotor that has 10n magnetic poles or 14n magnetic poles, and a stator that has 12n motor coils (n is an integer). The stator includes 6n delta-connected coils and 6n star-connected coils. The 6n delta-connected coils are arranged in a circular pattern such that any two of the 6n delta-connected coils, which are next to each other in the circumferential direction, are different in winding direction. The 6n star-connected coils are arranged between the delta-connected coils by connecting one ends of the star-connected coils to respective 6n connection lines that provide connection between the delta-connected coils such that any two of the star-connected coils, which are next to each other in the circumferential direction, are different in winding direction. Terminals of the star-connected coils are grouped into sets each including three terminals that are next to each other in the circumferential direction, and three-phase driving voltages are applied to the other ends of the star-connected coils in each set.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view schematically showing an electric power steering system (EPS);
FIG. 2 is a sectional view of a motor;
FIG. 3 is a perspective view of a stator;
FIG. 4 is a perspective view of motor coils connected in delta (delta-connected coils);
FIG. 5A and FIG. 5B are perspective views of motor coils (star-connected coils), each of which is connected to a connection line that provide connection between the delta-connected coils after the delta-connection is formed;
FIG. 6 is a perspective view that shows a winding structure formed of the motor coils and the connection lines;
FIG. 7 is a view that illustrates a process of manufacturing the delta-connected coils;
FIG. 8 is a developed view of the coils of the motor;
FIG. 9 is a connection diagram of the motor; and
FIG. 10 is a perspective view of a bus bar.

### DETAILED DESCRIPTION OF EMBODIMENTS

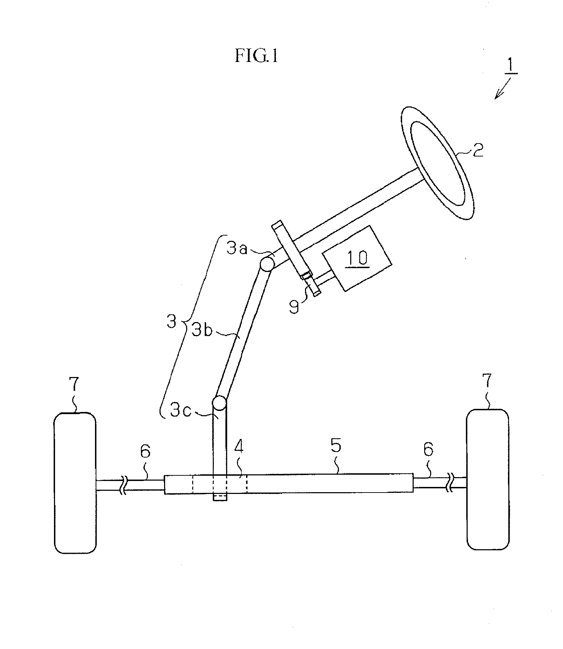

Hereafter, a brushless motor that constitutes a driving source for an electric power steering system (EPS) according to an embodiment of the invention will be described with reference to the accompanying drawings. As shown in FIG. 1, in an electric power steering system (EPS) 1 according to the present embodiment, a steering shaft 3 to which a steering wheel 2 is fixed is coupled to a rack shaft 5 via a rack and pinion mechanism 4. Rotation of the steering shaft 3 resulting from a steering operation is converted into a reciprocating linear motion of the rack shaft 5 by the rack and pinion mechanism 4. The reciprocating linear motion of the rack shaft 5 resulting from the rotation of the steering shaft 3 is transmitted to knuckles (not shown) via tie rods 6 coupled to respective ends of the rack shaft 5. As a result, the steered angle of steered wheels 7 is changed.

The steering shaft 3 according to the present embodiment is formed by coupling a column shaft 3a, an intermediate shaft 3b and a pinion shaft 3c together. The EPS 1 according to the present embodiment is formed as a so-called column-type EPS in which the column shaft 3a is rotated using a motor 10 as a driving source.

That is, in the EPS 1 according to the present embodiment, the speed of rotation of the motor 10 is reduced by a reduction mechanism 9 and the rotation having a reduced speed is transmitted to the steering shaft 3 (column shaft 3a). Thus, the motor torque is applied to a steering system as an assist force.

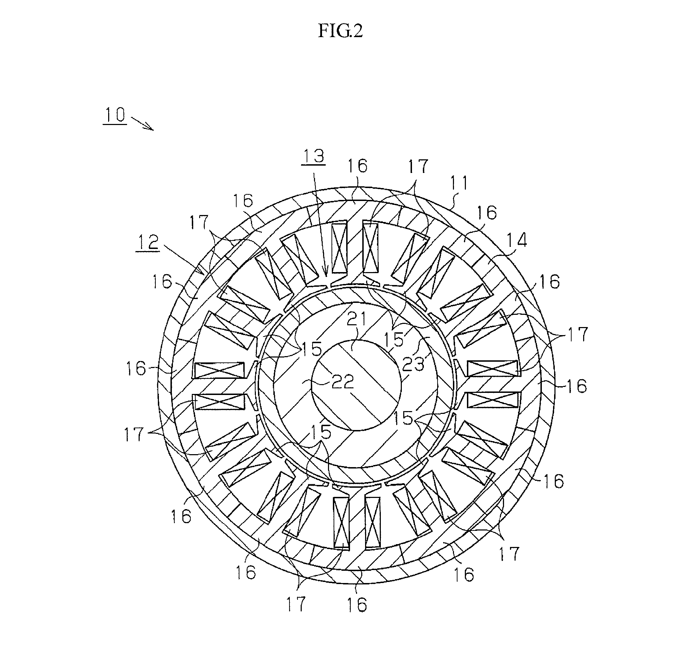

Next, the motor 10 that constitutes the driving source for the EPS 1 according to the present embodiment will be described. As shown in FIG. 2, the motor 10 according to the present embodiment is formed as a brushless motor that includes a stator 12 and a rotor 13. The stator 12 is accommodated in a housing 11. The rotor 13 is rotatably supported at a position radially inward of the stator 12.

More specifically, the stator 12 has an annular portion 14 and a plurality of teeth 15. The annular portion 14 is fixed to the inner periphery of the housing 11 that has a substantially cylindrical shape. The teeth 15 extend radially inward from the annular portion 14. Specifically, the stator 12 according to the present embodiment has "twelve" teeth 15 that are equiangularly arranged along the whole circumference of the annular portion 14. A motor coil 17 is wound around each of these teeth 15.

The stator 12 according to the present embodiment has a so-called split core coupled structure in which multiple split cores 16 are coupled together in a circular pattern. Each split core 16 has a shape obtained by splitting the annular portion 14 into twelve such that each split core 16 has one tooth 15. By being press-fitted into the housing 11 along the axial direction, the stator 12 is accommodated in the housing 11 with its outer periphery (outer periphery of the annular portion 14) fixed to the inner periphery of the housing 11.

The rotor 13 is formed by fixing a magnet 23 to the outer periphery of a rotor core 22 that rotates together with a rotary shaft 21. Specifically, a cylindrical ring magnet is used as the magnet 23 according to the present embodiment, and ten magnetic poles are formed at the outer periphery of the magnet 23 through magnetization. The rotor 13 is rotatably supported at a position radially inward of the stator 12, when the rotary shaft 21 is supported by a bearing (not shown) provided at the housing 11.

That is, the rotor 13 rotates on the basis of the relationship between a field magnetic flux formed by each magnetic pole of the magnet 23 and a rotating magnetic field formed on the stator 12-side. One end of the rotary shaft 21, which protrudes outward from an axial end portion of the housing 11, serves as an output portion of the motor 10 according to the present embodiment. Motor torque generated by the rotation of the rotor 13 is taken out of the motor 10 through the output portion.

Next, a coil structure in the motor according to the present embodiment and the structure of the motor will be described.

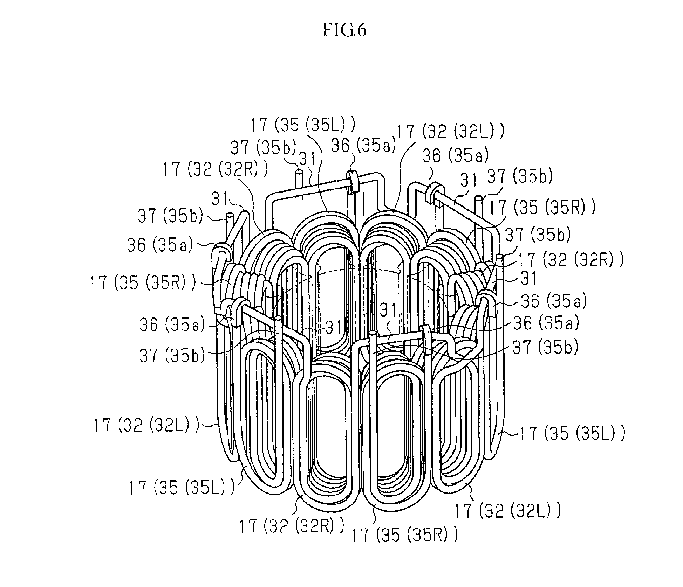

FIG. 3 is a perspective view of the stator according to the present embodiment. FIG. 4 is a perspective view of motor coils connected in delta (delta-connected coils). FIG. 5A and FIG. 5B are perspective views of motor coils (star-connected coils), each of which is connected to a corresponding one of connection lines that provide connection between the coils connected in delta, after the delta-connection is formed. FIG. 6 is a perspective view that shows a coil structure formed of these motor coils and connection lines in the motor according to the present embodiment.

As shown in FIG. 3, in the stator 12 according to the present embodiment, a substantially annular insulating holder 30 is attached to one axial ends of the split cores 16 that are arranged in a circular pattern, that is, provided on one axial end side of the motor coils 17 that are arranged in a circular pattern and wound around the respective teeth 15. The motor coils 17 are connected to each other through six connection lines 31, at positions on the opposite side of the insulating holder 30 from the motor coils 17 in the axial direction.

The insulating holder 30 according to the present embodiment is made of an insulating resin, and retains the split cores 16 that constitute the stator 12, more specifically, portions that form the annular portion 14, with the split cores 16 arranged in a circular pattern. The stator 12 according to the present embodiment is press-fitted into the housing 11 with the split cores 16 temporarily assembled together by the insulating holder 30.

More specifically, as shown in FIG. 4 and FIG. 6, the motor 10 according to the present embodiment includes six motor coils 17 (delta-connected coils 32) that are connected in delta via the connection lines 31 such that any two of the motor coils 17, which are next to each other in the circumferential direction, are different in winding direction.

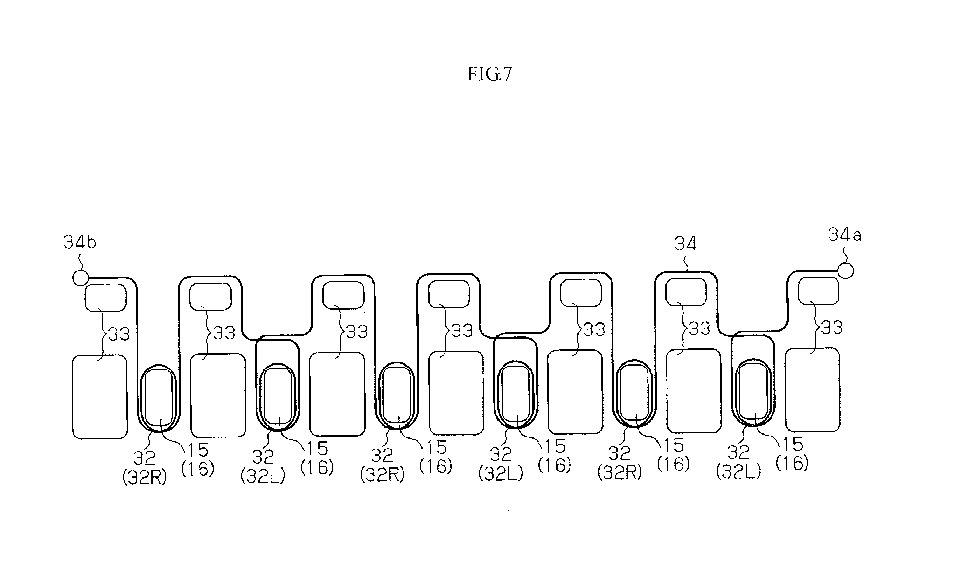

As shown in FIG. 7, in the present embodiment, a winding wire 34 is successively wound around the six teeth 15 of the split cores 16 arranged at substantially equiangularly using jigs 33 such that the winding direction alternates between right-handed winding and left-handed winding. By connecting a starting point 34a and a terminal point 34b of the winding wire 34 to each other, the delta-connected coils 32 are formed in such a manner that right-handed winding coils 32R and left-handed winding coils 32L are alternately arranged in the circumferential direction via the connection lines 31 as shown in FIG. 4.

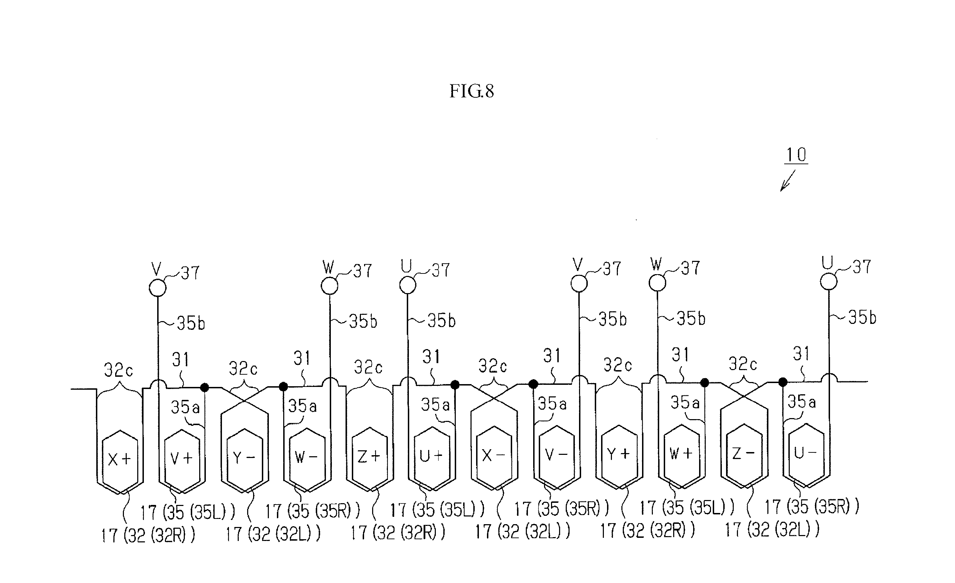

As shown in FIG. 6 and FIG. 8, in the present embodiment, one end (connection end 35a) of a right-handed winding coil 35R as shown in FIG. 5A or one end (connection end 35a) of a left-handed winding coil 35L as shown in FIG. 5B is connected to a middle portion of each connection line 31. More specifically, in the present embodiment, the right-handed winding coils 35R and the left-handed winding coils 35L are alternately connected to the connection lines 31 in such a manner that any two of the motor coils 17 that are connected, after the delta-connection is formed, to the corresponding two connection lines 31 next to each other in the circumferential direction are different in winding direction.

In the present embodiment, a substantially U-shaped hook portion 36 is formed at each of the connection ends 35a of these right-handed winding coils 35R and left-handed winding coils 35L. Each of the right-handed winding coils 35R and left-handed winding coils 35L is connected to a corresponding one of the connection lines 31 by crimping the hook portion 36.

Furthermore, in the present embodiment, these six motor coils 17 that are connected, after the delta-connection is formed, to the corresponding connection lines 31, that is, the three right-handed winding coils 35R and the three left-handed winding coils 35L, are each arranged between the delta-connected coils 32 at a circumferential position corresponding to the connection line 31 to which the winding coil 35 is connected. Terminals of these right-handed winding coils 35R and the left-handed winding coils 35L are grouped into two sets each including three terminals that are next to each other in the circumferential direction. Three-phase (U, V and W) driving voltages are applied to the other ends (free ends 35b) of the right-handed winding coil(s) 35R and left-handed winding coil(s) 35L in each set.

That is, as shown in the connection diagram in FIG. 9, in the present embodiment, the six motor coils 17 (35R and 35L) that are connected, after the delta-connection is formed, to the connection lines 31 constitute star-connected coils 35 that use the delta-connection α of the connection lines 31 and the delta-connected coils 32 as a neutral point. As shown in FIG. 8, when three-phase driving voltages are applied, in the above manner, to the free ends 35b that constitute power feed terminals 37, the phase of current that is supplied to the star-connected coils 35 is shifted by "π/6" in electric angle from the phase of current that is supplied to the delta-connected coils 32.

Note that, in FIG. 8 and FIG. 9, the delta-connected coils 32 to which the phase signs "X-", "Y-" and "Z-" are respectively assigned have phases shifted by "180°" in electric angle from the phases of the delta-connected coils 32 to which the phase signs "X+", "Y+" and "Z+" are assigned (coils having the same phases as the coils 32 having the phase signs "X-", "Y-" and "Z-"). The phase signs "U+", "V+", "W+", "U-", "V-" and "W-" assigned to the star-connected coils 35 correspond to the phase signs "X+", "Y+", "Z+", "X-", "Y-" and "Z-" assigned to the delta-connected coils 32, respectively.

An electronic control unit (ECU) (not shown) is arranged at one axial end of the motor 10 according to the present embodiment. The ECU supplies three-phase driving electric powers to the motor 10. In the present embodiment, the free ends 35b (see FIG. 3) of the star-connected coils 35, which constitute the power feed terminals 37 as described above, are directly connected to an electronic circuit (PWM inverter output terminals) installed on the ECU.

More specifically, as shown in FIG. 3, in the present embodiment, a plurality of cutouts 40 that open radially outward is formed at the peripheral portion of the insulating holder 30. The insulating holder 30 is connected to one axial end of the split cores 16 arranged in a circular pattern with the connection lines 31 (see FIG. 4) that provide connection between the delta-connected coils 32 pushed radially outward. The terminals of the star-connected coils 35, that is, the connection ends 35a at which the hook portion 36 are formed and the free ends 35b that constitute the power feed terminals 37, and the terminals 32c of the delta-connected coils 32 are fitted in these cutouts 40. Thus, the connection lines 31 are arranged at the positions on the opposite side of the insulating holder 30 from the motor coils 17 in the axial direction.

The insulating holder 30 according to the present embodiment has a plurality of retaining portions 41 at positions corresponding to the free ends 35b of the star-connected coils 35. The retaining portions 41 restrict movement of the free ends 35b. More specifically, each of the retaining portions 41 according to the present embodiment is formed in a substantially cylindrical shape, and protrudes from an upper surface 30a of the insulating holder 30, that is, a surface on the side on which the connection lines 31 are arranged, toward the connection line 31 in the axial direction. Furthermore, a cutout 41 a that is contiguous with the corresponding cutout 40 is formed in the side surface of each retaining portion 41.

That is, the free end 35b of each of the star-connected coils 35 is inserted into the cylinder of the retaining portion 41 via the cutout 41 a. In the present embodiment, these retaining portions 41 restrict movement of the free ends 35b, more specifically, restrict movement in such a direction that the free ends 35b approach the connection lines 31. With this structure, contact between the connection lines 31 and the free ends 35b is prevented.

According to the present embodiment, the following operations and effects are obtained.
1) The motor 10 that is configured as a 10-pole 12-slot brushless motor includes six delta-connected coils 32 that are among the twelve motor coils 17 and that are arranged in a circular pattern such that any two of the delta-connected coils 32, which are next to each other in the circumferential direction, are different in winding direction. In the motor 10, one ends (connection ends 35a) of the remaining six motor coils 17 are connected to the six connection lines 31 that connect the delta-connected coils 32 to each other such that any two of the remaining six motor coils 17, which are next to each other in the circumferential direction, are different in winding direction. Thus, it is possible to provide the six star-connected coils 35, each of which is arranged between the consecutive delta-connected coils 32. The terminals of the star-connected coils 35 are grouped into two sets each including three terminals that are next to each other in the circumferential direction. Three-phase driving voltages are applied to the other ends (free ends 35b) of the star-connected coils 35 in each set.

With the above structure described above, it is possible to form the six delta-connected coils 32 and the six star-connected coils 35 such that the phase of current that is supplied to the star-connected coils 35 is shifted by "π/6" from the phase of current that is supplied to the delta-connected coils 32, without connecting the motor coils 17 located at positions apart from each other in the circumferential direction. As a result, it is possible to achieve both size reduction and cost reduction by omitting a bus bar while suppressing occurrence of a torque ripple.

2) The substantially annular insulating holder 30 is provided on one axial end side of the motor coils 17 that are arranged in a circular pattern and wound around the teeth 15. Thus, it is possible to prevent a short circuit between the motor coils 17 with a simple structure and without complicating the assembling process. In addition, usually, in a so-called inner rotor-type brushless motor, the stator is formed by coupling the multiple split cores 16 together. With the above structure, the split cores 16 temporarily assembled together in a circular pattern may be retained by the insulating holder 30. As a result, it is possible to streamline the assembling work, thereby reducing the manufacturing cost.

3) The cutouts 40 into which the terminals 32c of the delta-connected coils 32 and the terminals (connection ends 35a and free ends 35b) of the star-connected coils 35 are inserted are formed at the peripheral portion of the insulating holder 30.

With the above structure, the insulating holder 30 is fitted with the connection lines 31 that provide connection between the delta-connected coils 32 pushed radially outward. After that, the terminals (35a and 35b) of the star-connected coils 35 and the delta-connected coils 32 (32c) are fitted in the cutouts 40. In this way, it is possible to easily arrange the connection lines 31 at the positions on the opposite side of the insulating holder 30 from the motor coils 17 in the axial direction. As a result, it is possible to further reduce manufacturing cost by streamlining the assembling work.

4) The insulating holder 30 has the retaining portions 41 at positions corresponding to the free ends 35b of the star-connected coils 35. The retaining portions 41 restrict movement of the free ends 35b. With the above structure, it is possible to prevent contact between the free ends 35b and the connection lines 31. Furthermore, it is possible to easily check whether the star-connected coils 35 are properly connected such that the winding direction alternates between right-handed winding and left-handed winding in the circumferential direction. Thus, it is possible to further improve the reliability.

Note that the above-described embodiment may be modified as follows. In the above embodiment, the invention is applied to a brushless motor that is used as the driving source for the EPS 1. However, the invention is not limited to this, and the invention may be applied to a brushless motor used for an apparatus other than an EPS. Even when the invention is applied to an EPS, the invention may be applied not only to the columnar EPS as described in the above embodiment but also to a rack-type EPS or a pinion-type EPS.

In the above embodiment, the invention is applied to the 10-pole 12-slot brushless motor. However, the invention is not limited to this, and the invention may be applied to a 14-pole 12-slot brushless motor. Furthermore, the invention may be applied to a 10n-pole brushless motor and a 14n-pole brushless motor (where "n" is an integer) each having magnetic poles and slots (motor coils) the number of which are the integral multiples of the above-mentioned numbers.

In the above embodiment, the insulating holder 30 is arranged on one axial end side of the motor coils 17. However, resin molding may be performed instead of providing the insulating holder 30.
Next, technical ideas that may be understood from the above embodiment will be described.

A) A brushless motor is characterized in that the stator is provided with the annular insulating holder arranged on one axial end side of the motor coils that are arranged in a circular pattern, and the motor coils are connected to each other through the connection lines, at the positions on the opposite side of the insulating holder from the motor coils in the axial direction, whereby the delta-connected coils and the star-connected coils are formed.

With the above structure, it is possible to prevent a short circuit between the motor coils with a simple structure and without complicating the assembling process. Usually, in a so-called inner rotor-type brushless motor, the stator is formed by coupling a plurality of split cores together. With the above structure, the split cores temporarily assembled together in a circular pattern may be retained by the insulating holder. As a result, it is possible to streamline the assembling work, thereby reducing the manufacturing cost.

B) The brushless motor is characterized in that a plurality of cutouts into which the terminals of the delta-connected coils and the terminals of the star-connected coils are inserted is formed at the peripheral portion of the insulating holder. With the above structure, the insulating holder is fitted with the connection lines that provide connection between the delta-connected coils pushed radially outward. After that, the terminals of the star-connected coils and the terminals of the delta-connected coils are fitted in the cutouts. In this way, it is possible to easily arrange the connection lines at the positions on the opposite side of the insulating holder from the motor coils in the axial direction. As a result, it is possible to further reduce the manufacturing cost by streamlining the assembling work.

C) The brushless motor is characterized in that the insulating holder has retaining portions that are formed at the positions corresponding to free ends of the star-connected coils to restrict movement of the free ends. With the above structure, it is possible to prevent contact between the free ends and the connection lines. Furthermore, it is possible to easily check whether the star-connected coils 35 are properly connected such that the winding direction alternates between right-handed winding and left-handed winding in the circumferential direction. Thus, it is possible to further improve the reliability.

D) A method for manufacturing a brushless motor that includes a rotor having 10n magnetic poles or 14n magnetic poles (where n is an integer) and a stator having 12n motor coils, is characterized by including: forming 6n delta-connected coils such that the winding direction thereof alternates between right-handed winding and left-handed winding; and forming 6n star-connected coils that are arranged between the delta-connected coils by connecting one ends of the coils to the respective 6n connection lines that provide connection between the delta-connected coils such that any two of the star-connected coils, which are next to each other in the circumferential direction, are different in winding direction.

According to the invention, it is possible to provide more compact and lower-cost brushless motor and electric power steering system by omitting a bus bar, while suppressing occurrence of a torque ripple.

## Claims

1. A brushless motor comprising:
a rotor that has 10n magnetic poles or 14n magnetic poles, wherein n is an integer; and
a stator that has 12n motor coils, wherein n is an integer,
wherein the stator comprises
6n delta-connected coils that are arranged in a circular pattern such that any two of the 6n delta-connected coils, which are next to each other in a circumferential direction, are different in winding direction; and
6n star-connected coils that are arranged between the delta-connected coils by connecting one ends of the star-connected coils to respective 6n connection lines that provide connection between the delta-connected coils such that any two of the star-connected coils, which are next to each other in the circumferential direction, are different in winding direction, and
wherein terminals of the star-connected coils are grouped into sets each including three terminals that are next to each other in the circumferential direction, and three-phase driving voltages are applied to the other ends of the star-connected coils in each set.

2. An electric power steering system comprising the brushless motor according to claim 1.
